# EUROPÄISCHE PATENTANMELDUNG

(11) **EP 2 982 618 A1**
(43) Veröffentlichungstag der Anmeldung: **10.02.2016**
(21) Anmeldenummer: 15175698.8
(22) Anmeldetag: 07.07.2015
(51) Int. Cl.: B65G 27/00, B65G 27/24, B06B 3/00

(54) **SCHWINGFÖRDERER ZUR ZWEIDIMENSIONALEN BEWEGUNG VON OBJEKTEN SOWIE VERFAHREN ZUM BETRIEB DES SCHWINGFÖRDERERS**

(30) Priorität: 06.08.2014 DE 102014111168
(71) Anmelder: Afag Holding AG, 6052 Hergiswil (CH)
(72) Erfinder: BOTT, Klaus, 90518 Altdorf (DE); MESAN, Izudin, 90439 Nürnberg (DE); MOJRZISCH, Sebastian, 30449 Hannover (DE); TWIEFEL, Jens, 30159 Hannover (DE); WALLASCHECK, Jörg, 30161 Hannover (DE)
(74) Vertreter: Lindner Blaumeier Patent- und Rechtsanwälte

(57) **Zusammenfassung**

Schwingförderer zur zweidimensionalen Bewegung von Objekten (2, 3, 4, 5), umfassend eine Schwingplatte (1), auf deren Förderoberfläche wenigstens ein Objekt (2, 3, 4, 5) durch Schwingungen der Schwingplatte (1) bewegbar ist, sowie wenigstens zwei Anregungselemente zur Anregung von Schwingungen der Schwingplatte (1), wobei die Anregungselemente an voneinander beabstandeten Anregungspositionen (6, 7) mit der Schwingplatte (1) gekoppelte Ultraschallwandler sind, durch die die Schwingplatte (1) an der jeweiligen Anregungsposition (6, 7) in Abhängigkeit eines jeweils separat durch eine Steuereinrichtung an das jeweilige Anregungselement bereitstellbaren jeweiligen Steuersignals zur Schwingung anregbar ist.

## Beschreibung

Die Erfindung betrifft einen Schwingförderer zur zweidimensionalen Bewegung von Objekten, umfassend eine Schwingplatte, auf deren Förderoberfläche wenigstens ein Objekt durch Schwingungen der Schwingplatte bewegbar ist, sowie wenigstens zwei Anregungselemente zur Anregung von Schwingungen der Schwingplatte.

Schwingförderer werden genutzt um eine Vielzahl insbesondere kleinerer Objekte zu fördern. Objekte werden durch Vibrationen gefördert. Typischerweise werden steife Förderschienen oder starre Platten genutzt, die eine elliptische Bewegung durchführen und somit die Objekte durch Mikrowürfe transportieren.

Beim Transport bzw. bei der Bewegung von Objekten, beispielsweise von elektrischen Bauteilen, ist es wünschenswert, die Objekte zweidimensional bewegen zu können, die Objekte auszurichten zu können und/oder Ansammlungen von Objekten trennen zu können. Eine Ausrichtung und Separierung von Objekten kann bei einem Schwingförderer beispielsweise dadurch erfolgen, dass bei einer Längsförderung in einem Schwingförderer die Förderoberfläche des Schwingförderers in Förderrichtung profiliert ist, so dass einzelne Objekte in einzelnen Profilen geführt und ausgerichtet werden. Als Alternative hierzu ist es bekannt, eine Schwingplatte durch separate Aktoren in allen drei Raumrichtungen bewegbar auszubilden. Somit können mehrere Objekte gemeinsam auf einer Schwingplatte in zwei Richtungen verschoben werden.

Um eine separate Bewegung einzelner Objekte zu ermöglichen, schlägt die Druckschrift DE 102 61 659 A1 vor, eine Vielzahl von Aktoren auf der Oberfläche einer zu Schwingungen in mehrere Raumrichtungen anregbaren Platte vorzusehen, die während einer vorgegebenen Aktivierungszeit jeweils eine Normalkraft auf die Objekte ausüben. Somit können Objekte zwar einzeln und gezielt bewegt werden, eine Umsetzung einer entsprechenden Anordnung zur Bewegung von Objekten ist jedoch technisch sehr aufwendig und es ist stets nur eine separate Bewegung solcher Objekte möglich, auf die durch die vorgesehenen Aktoren eine Kraft ausgeübt werden kann, z. B. von magnetischen Objekten.

Der Erfindung liegt somit die Aufgabe zugrunde, einen Schwingförderer anzugeben, der technisch relativ einfach zu realisieren ist und der dennoch eine Kontrolle über die Bewegungsrichtung von Objekten und/oder eine Trennung von auf der Förderoberfläche nahe beieinanderliegenden Objekten ermöglicht.

Die Aufgabe wird erfindungsgemäß durch einen Schwingförderer der eingangs genannten Art gelöst, wobei die Anregungselemente an voneinander beabstandeten Anregungspositionen mit der Schwingplatte gekoppelte Ultraschallwandler sind, durch die die Schwingplatte an der jeweiligen Anregungsposition in Abhängigkeit eines jeweils separat durch eine Steuereinrichtung an das jeweilige Anregungselement bereitstellbaren jeweiligen Steuersignals zur Schwingung anregbar ist.

Erfindungsgemäß wird vorgeschlagen, an voneinander beabstandeten Anregungspositionen mit der Schwingplatte gekoppelte Ultraschallwandler zu nutzen, um die Schwingplatte zu Schwingungen anzuregen. Aufgrund der hohen Anregungsfrequenz und der lokalen Einkopplung der Anregung wird die Schwingplatte insbesondere nicht zu einer globalen Schwingung angeregt, bei der die gesamte Schwingplatte als steifes Element schwingt, sondern es werden vorzugsweise Biegeschwingungen, insbesondere Oberflächenschwingungen der Förderoberfläche der Schwingplatte angeregt. Aufgrund dieser Anregung werden auf der Förderoberfläche Wanderwellen und/oder stehende Wellen ausgebildet, die die Bewegung der Objekte verursachen.

Bei einem Abklingen der Amplitude einer Wanderwelle mit zunehmendem Abstand von der Quelle, also insbesondere einer der Anregungspositionen, erfolgt ein Transport von Objekten auf der Förderoberfläche entgegen der Ausbreitungsrichtung der Wanderwelle. Bei der Ausbildung einer stehenden Welle auf der Schwingplatte werden Objekte in Richtung der Knoten der stehenden Welle bewegt. Durch Vorgabe entsprechender Steuersignale durch die Steuereinrichtung können die Ultraschallwandler unabhängig angesteuert werden, wobei vorzugsweise eine gleiche Schwingungsfrequenz für alle Ultraschallwandler genutzt wird. Somit können verschiedene Gesamtschwingungen der Schwingplatte erreicht werden. Durch Variation der Steuersignale, insbesondere der Amplitudenverhältnisse und/oder der Phasen der Steuersignale, die den Anregungselementen zugeführt werden, können verschiedene Bewegungsrichtungen von Objekten auf der Förderoberfläche erreicht werden. Zugleich ist die Bewegungsrichtung eines Objekts für eine Vielzahl von Kombinationen von Steuersignalen abhängig von der Objektposition auf der Förderoberfläche. Bereits ein geringer Positionsunterschied kann zu einem starken Unterschied der Bewegungsrichtung führen. Somit ist der erfindungsgemäße Schwingförderer einerseits dazu geeignet, ein Objekt auf der Schwingplatte durch eine Bewegung in verschiedene Richtungen zu positionieren, und zum anderen dazu, Objekte zu vereinzeln, also nahe beieinanderliegende Objekte in verschiedene Richtungen zu bewegen.

Die Steuereinrichtung kann mehrere Steuerschaltungen umfassen, die jeweils einem oder mehreren Anregungselementen zugeordnet sind. Es ist möglich, dass die Steuerschaltungen einzelne Anregungselemente oder Gruppen von Anregungselementen vollständig unabhängig voneinander steuern. Vorteilhaft sind die Steuerschaltungen jedoch synchronisiert, um jeweils Steuersignale mit gleicher Schwingungsfrequenz und insbesondere einer vorgegebene Phasenlage der verschiedenen Steuersignale bereitzustellen.

Im erfindungsgemäßen Schwingförderer ist es möglich, jeweils nur einem der Anregungselemente ein Steuersignal zuzuführen und die weiteren Anregungselemente beispielsweise auf ein Massepotential zu legen. Insbesondere wenn eine dämpfende Schwingplatte oder weitere schwingungsdämpfende Elemente genutzt werden, wird auf der Schwingplatte eine Wanderwelle generiert, die von der Anregungsposition des angesteuerten Anregungselements ausgeht und mit zunehmendem Abstand von dieser Anregungsposition an Amplitude verliert. Eine derartige Wanderwelle führt dazu, dass Objekte auf der Schwingplatte in Richtung der jeweiligen Anregungsposition bewegt werden, wobei die Bewegungsgeschwindigkeit mit zunehmender Nähe zur Anregungsposition zunimmt. In einem erfindungsgemäßen Schwingförderer werden mehrere Anregungselemente genutzt, die insbesondere nicht auf einer Gerade liegen. Je nach Auswahl des anzusteuernden Anregungselements kann ein Objekt bereits in eine Mehrzahl von Richtungen bewegt werden. Aufgrund der positionsabhängigen Bewegungsgeschwindigkeit ist auch bei ausschließlicher Ansteuerung nur eines Anregungselements bereits eine Vereinzelung von Objekten möglich.

Es ist jedoch wünschenswert, Bewegungen von Objekten auf Kurven auf der Schwingplatte ohne eine Änderung der Ansteuerung der Anregungselemente zu ermöglichen und/oder verschiedene Bewegungsrichtungen auch bei Nutzung von wenigen, insbesondere von nur zwei, Anregungselementen zu ermöglichen.

Daher ist es möglich, dass die Anregungselemente durch die Steuereinrichtung derart ansteuerbar sind, dass durch eine Überlagerung der angeregten Schwingungen die Förderoberfläche in eine Gesamtschwingung versetzbar ist. Es werden also mehreren der Anregungselemente Steuersignale zugeführt, die zu einer Schwingung des Anregungselements führen. Die Nutzung einer durch Überlagerung von angeregten Schwingungen gebildeten Gesamtschwingung zur Bewegung von Objekten wird im Folgenden am Beispiel der Ansteuerung von zwei Anregungselementen erläutert. Selbstverständlich können auch mehr als zwei Anregungselemente zugleich zur Erzeugung von Schwingungen angesteuert werden, um eine Gesamtschwingung zu erzeugen. Zudem wird im Folgenden davon ausgegangen, dass die beiden Anregungselemente mit dergleichen Frequenz angeregt werden. Eine Anregung mit unterschiedlichen Frequenzen an unterschiedlichen Positionen ist möglich, die Auswirkungen sind jedoch weniger intuitiv erfassbar.

In einem einfachen Beispiel sind mehrere Objekte auf einer Verbindungsgeraden zwischen den Anregungspositionen der zwei angesteuerten Anregungselemente angeordnet. Sind die Amplituden der angeregten Schwingungen gleich, weisen also insbesondere die Steuersignale die gleiche Amplitude auf und sind die Anregungselemente gleich ausgebildet, so werden die Objekte jeweils in Richtung der Anregungsposition bewegt, der sie zu Beginn der Anregung näher sind. Sind die Objekte zu Beginn also beispielsweise gleichmäßig im Bereich zwischen den Anregungspositionen verteilt, so werden sie in zwei Gruppen geteilt. Durch eine Anpassung der relativen Amplituden der Steuersignale kann der Punkt zwischen den Anregungspositionen, an dem sich die Bewegungsrichtung der Objekte ändert, angepasst werden.

In einem zweiten Beispiel soll ein Objekt betrachtet werden, das sich an einer Objektposition auf der Förderoberfläche befindet, die von einer Verbindungsgeraden zwischen den Anregungspositionen der angesteuerten Anregungselemente beabstandet ist. Zunächst soll angenommen werden, dass die Schwingungsamplituden der beiden Anregungselemente und der jeweilige Abstand des Objekts von den Anregungspositionen gleich sind. In diesem Fall bewegt sich das Objekt mit einer Bewegungsrichtung, die senkrecht auf der Richtung der Verbindungsgeraden steht, auf die Verbindungsgerade zu. Das Objekt bewegt sich somit auf beide Anregungselemente zu. Befindet sich das Objekt anfänglich näher an einer der beiden Anregungspositionen und/oder wird eine der Amplituden des Steuersignals größer als die Amplitude des anderen Steuersignals gewählt, so nähert sich das Objekt einer der Anregungspositionen schneller als der anderen. Es erfolgt in diesem Fall eine kurvenartige Bewegung des Objekts.

Durch eine entsprechende Wahl der Amplituden der Steuersignale kann für ein Objekt an einer bestimmten Objektposition, die nicht auf der Verbindungsgeraden zwischen den beiden angesteuerten Anregungselementen liegt, ein Bewegungswinkel zwischen der Bewegungsrichtung und der Verbindungsgerade vorgegeben werden. Eine entsprechende Wahl der Amplituden erlaubt eine freie Festlegung dieses Winkels zwischen einer linearen Bewegung auf den ersten der Anregungsbereiche zu und einer linearen Bewegung auf den zweiten der Anregungsbereichen zu. Der wählbare Winkelbereich kann zusätzlich erweitert werden, wenn eines der Anregungselemente als Dämpfelement betrieben wird, indem eine Phasenlage zwischen den Anregungen angepasst wird.

Vorteilhaft umfasst der erfindungsgemäße Schwingförderer wenigstens drei der Anregungselemente, wobei die Anregungsposition des dritten Anregungselements von einer Verbindungsgerade zwischen den Anregungspositionen des ersten und des zweiten Anregungselements beabstandet ist. Der Schwingförderer kann somit wenigstens drei Anregungselemente aufweisen, die nicht auf einer gemeinsamen Geraden liegen. Durch Anregungselemente erzeugte Wanderwellen wirken im erfindungsgemäßen Schwingförderer anziehend. Durch das Vorsehen von wenigstens drei Anregungselementen wird ein Vieleck aufgespannt, dessen Ecken durch die Anregungspositionen gebildet werden. Innerhalb des Vielecks kann ein Objekt durch Vorgabe entsprechender Steuersignal an jede beliebige Position bewegt werden. Dabei können beliebig viele Anregungselemente vorgesehen werden. Zusätzlich können auf Verbindungsgeraden zwischen den Ecken weitere Anregungspositionen vorgesehen sein.

Die Schwingungsplatte kann mehreckig, insbesondere rechteckig, mit mehreren Seiten sein, wobei randseitig im Bereich jeder der Seiten jeweils wenigstens eines der Anregungselemente angeordnet ist. Die Anregungspositionen können innerhalb der Plattenfläche der Schwingplatte und insbesondere benachbart zum Rand der Schwingplatte angeordnet sein. Insbesondere wenn an jeder Seite mehrere Anregungselemente vorgesehen sind, kann eine Bewegungsrichtung und ein Zielpunkt einer Bewegung für ein Objekt auf der Schwingplatte durch Anpassung der Steuersignale für die Anregungselemente im Wesentlichen frei bestimmt werden.

Alternativ ist es möglich, dass die Schwingplatte im Wesentlichen rund oder elliptisch ist, wobei die Anregungselemente randseitig umlaufend angeordnet sind.

In beiden beschriebenen Fällen können Anregungselemente alternativ nur an Teilen der Seiten bzw. an einem Abschnitt des Umfangs angeordnet sein.

Die Ultraschallwandler können jeweils einen, insbesondere vorgespannten, mehrlagigen Piezoaktor umfassen. Mehrlagige Piezoaktoren sind besonders geeignet, um bereits bei relativ geringen Spannungen einen hohen Hub und/oder große Kräfte zu verursachen. Durch eine Vorspannung des Piezoaktors, also beispielsweise durch das Anordnen der Lagen des Pizeoaktors in einem Gehäuse, derart, dass der Piezoaktor ohne eine angelegte Spannung bereits komprimiert ist, können die bereits bei geringen Spannungen zur Verfügung stehenden Kräfte weiter erhöht werden. Das Gehäuse kann beispielsweise aus Keramik oder Metall gebildet sein.

Der Piezoaktor kann jeweils zwischen der Schwingplatte und einem Gegengewicht angeordnet sein. Das Gegengewicht kann ausschließlich über den Piezoaktor bzw. das Gehäuse eines vorgespannten Piezoaktors mit der Schwingplatte verbunden sein und ansonsten frei schwingen. Insbesondere bei einem Betrieb des Piezoaktors bei einer Resonanzfrequenz des Systems aus Piezoaktor, Gegengewicht und insbesondere einem Kopplungselement, das den Piezoaktor mit der Schwingplatte verbindet, können bereits bei geringen Amplituden des Steuersignals große Schwingungsamplituden erreicht werden.

Der Piezoaktor oder ein mit dem Piezoaktor fest verbundenes Koppelelement kann jeweils mit der Schwingplatte verklebt und/oder verschraubt und/oder formschlüssig verbunden sein. Alternativ wäre auch eine kraftschlüssige Verbindung zwischen dem Piezoaktor bzw. dem Koppelelement und der Schwingplatte möglich. Die Schwingplatte könnte beispielsweise durch eine am Koppelelement angeordnete Klemmeinrichtung geklemmt sein. Eine stabile Kopplung des Piezoaktors zur Schwingplatte ist wesentlich, um eine optimale Einkopplung der Schwingung in die Schwingplatte zu erreichen.

Der erfindungsgemäße Schwingförderer kann wenigstens ein Dämpfelement umfassen und/oder die Schwingplatte selbst kann aus einem schwingungsdämpfenden Material gebildet sein, sodass die Schwingungsamplitude der Schwingplatte bei einer Anregung durch wenigstens eines der Anregungselemente mit zunehmendem Abstand von der dem Anregungselement zugeordneten Anregungspositionen in zumindest eine Richtung entlang der Förderoberfläche abfällt. Als schwingungsdämpfendes Material kann insbesondere ein Material mit hoher innerer Reibung, beispielsweise ein Kunststoff oder ein Elastomer genutzt werden.

Das Dämpfelement kann an einer Seitenfläche und/oder randseitig an der Förderoberfläche und/oder randseitig an der der Förderoberfläche abgewandten Fläche der Schwingplatte angeordnet sein. Insbesondere kann ein flächiger Bereich der Seitenfläche, der Förderoberfläche oder der abgewandten Fläche mit einem schwingungsdämpfenden Material beschichtet sein oder eine Schicht aus schwingungsdämpfendem Material kann auf die entsprechende Fläche aufgebracht und beispielsweise mit ihr verklebt sein.

Alternativ oder ergänzend ist es möglich, als Dämpfelement ein Dämpfelement vorzusehen, das in reibendem Kontakt mit dem Rand der Schwingplatte ist. In diesem Fall wird der Schwingplatte durch die Reibung Energie entzogen und die Schwingung wird somit ebenfalls gedämpft.

Durch eine randseitige Dämpfung der Schwingungen der Schwingplatte wird zum einen erreicht, dass die Amplitude einer durch ein Anregungselement generierten Wanderwelle mit zunehmendem Abstand von der entsprechenden Anregungsposition abnimmt, zum anderen werden Reflexionen an den Rändern der Schwingplatte und daher die Ausbildung von stehenden Wellen zumindest teilweise unterdrückt.

Das Dämpfelement kann insbesondere eine flächige Schicht aus einem schwingungsdämpfenden Material, beispielsweise einem Gummi oder einem Elastomer sein.

Alternativ oder ergänzend ist es auch möglich, eines oder mehrere der Anregungselemente eines erfindungsgemäßen Schwingförderers derart anzusteuern, dass sie als Dämpfelement wirken. Wenigstens ein ausgewähltes der Anregungselemente kann derart durch die Steuereinrichtung steuerbar sein, dass es eine Schwingungsamplitude einer durch wenigstens ein weiteres der Anregungselemente erzeugten Schwingung der Schwingplatte an der dem ausgewählten Anregungselement zugeordneten Anregungsposition reduziert.

Hierzu kann die Steuereinrichtung ausgebildet sein, das ausgewählte Anregungselement mit einem Steuersignal anzusteuern, das phasenstarr mit einer vorgegebenen Phasenlage zu dem Steuersignal des weiteren Anregungselements ist. Die Ausbreitungsgeschwindigkeit von Biege- bzw. Oberflächenwellen der Schwingplatte ist im Wesentlichen konstant. Somit folgt aus einer Anregung mit einer bestimmten Frequenz, Amplitude und Phase an der Anregungsposition des weiteren Anregungselements eindeutig eine Schwingungsamplitude, Phase und Frequenz an der Anregungsposition des ausgewählten Anregungselements. Die Phasenlage der Schwingungen an den verschiedenen Anregungspositionen ist ausschließlich von der Schwingungsfrequenz und der Ausbreitungsgeschwindigkeit der Welle auf der Schwingplatte abhängig. Durch Vorgabe eines passenden Phasenversatzes zwischen dem Steuersignal für das weitere Anregungselement und dem Steuersignal für das ausgewählte Anregungselement kann somit erreicht werden, dass das ausgewählte Anregungselement zu einer Schwingung angeregt wird, die gegenüber einer von dem weiteren Anregungselement einlaufenden Welle um 180° phasenversetzt ist und diese somit ganz oder teilweise aufhebt.

Gleiches gilt, wenn eine Anregung der Schwingplatte durch mehrere weitere Anregungselemente mit der gleichen Frequenz erfolgt. Insbesondere wenn die Schwingplatte an mehreren weiteren Anregungspositionen sinusförmig angeregt wird, entsteht durch Addition der aufgrund der Laufzeiten phasenverschobenen Sinussignale an der Anregungsposition des ausgewählten Anregungselements wiederum eine Sinusschwingung mit der gleichen Frequenz. Die Phasenlage dieser Schwingung kann aus den Abständen der weiteren Anregungspositionen zu der ausgewählten Anregungsposition sowie der Frequenz und der Ausbreitungsgeschwindigkeit der Schwingung auf der Schwingplatte bestimmt werden.

Alternativ ist es möglich, dass die Steuereinrichtung ausgebildet ist, eine Schwingung an der Anregungsposition des ausgewählten Anregungselements zu erfassen und das Steuersignal für das ausgewählte Anregungselement in Abhängigkeit der erfassten Schwingung zu bestimmen. Insbesondere kann die Schwingung an der Anregungsposition des ausgewählten Anregungselements durch das ausgewählte Anregungselement selbst erfasst werden. Dabei ist es möglich, dass das ausgewählte Anregungselement zunächst nicht angesteuert wird und durch die Steuereinrichtung an dem Anregungselement abfallende Spannungen gemessen werden. Insbesondere wenn das Anregungselement ein Ultraschallwandler ist, der einen Piezoaktor umfasst, sind die am Anregungselement abfallenden Spannungen im Wesentlich proportional zu einer Auslenkung der Schwingplatte an der Anregungsposition. Daher kann eine Schwingungsamplitude, Schwingungsfrequenz und Schwingungsphase an der Anregungsposition des ausgewählten Anregungselements gemessen werden und das Steuersignal kann derart bestimmt werden, dass es diese Schwingung kompensiert. Alternativ ist es möglich, die Erfassung der Schwingung und ein Dämpfen durch das ausgewählte Anregungselement gleichzeitig durchzuführen. Beispielsweise kann ein Regelkreis vorgesehen werden, der eine am Anregungselement abfallende Spannung auf im Wesentlichen 0 regelt und somit auch die Schwingungsamplitude an der Anregungsposition des ausgewählten Anregungselements im Wesentlichen auf 0 setzt.

Zur Anregung von Schwingungen der Schwingplatte ist es vorteilhaft, wenn die Steuereinrichtung ein Steuersignal mit der Resonanzfrequenz des jeweiligen Anregungselements bereitstellt. Somit können relativ große Schwingungsamplituden bereits bei einem geringen Verstellweg beispielsweise eines Piezoaktors und somit mit relativ geringen Steuerspannungen erreicht werden.

Alternativ oder ergänzend zur Nutzung von Wanderwellen zur Bewegung von Objekten können im erfindungsgemäßen Schwingförderer auch stehende Wellen der Schwingplatte, also Platteneigenformen, genutzt werden, um Objekte auf der Schwingplatte zu bewegen bzw. die Bewegung bestimmter Objekte zu unterdrücken. Daher ist es vorteilhaft, wenn durch die Steuereinrichtung derartige Steuersignale für die Anregungselement bereitstellbar sind, dass eine stehende Welle auf der Schwingplatte erzeugt wird. Eine entsprechende stehende Welle bzw. Platteneigenform weist insbesondere wenigstens einen Knoten bzw. wenigstens eine Knotenlinie auf der Schwenkplatte auf, an dem bzw. der im Wesentlichen keine Schwingung der Schwingplatte vorliegt. In diesem Fall erfolgt eine Bewegung von Objekten von Schwingungsbäuchen zu Schwingungsknoten. Dies kann insbesondere zur Separierung von Objekten bzw. zur Ansammlung von Objekten in bestimmten Bereichen der Schwingplatte genutzt werden.

Die Steuersignale für die Anregungselemente, die zur Ausbildung von stehenden Wellen führen, können durch theoretische Vorberechnung bestimmt werden.

Alternativ ist es möglich, entsprechende Steuersignale in einem vorangehenden Messprozess vor Nutzung des Schwingförderers zu bestimmen. Es ist jedoch auch möglich, die Steuersignale im laufenden Betrieb des Schwingförderers oder in Testintervallen, beispielsweise beim Beginn der Nutzung des Schwingförderers zu bestimmen. So können die Frequenzen von Steuersignalen eines oder mehrerer der Anregungselemente stufenweise oder kontinuierlich durchgefahren werden und durch eine Messung von Spannungen und insbesondere Strömen an den Anregungselementen oder weitere, beispielsweise optische Sensoren, können Frequenzen identifiziert werden, die zur Ausbildung von Platteneigenformen führen.

Die Objekte, die durch den erfindungsgemäßen Schwingförderer bewegt werden, können Objekte sein, bei denen bestimmte Ausrichtungen gewünscht sind, beispielsweise elektrische Bauteile. Es ist daher vorteilhaft, wenn der Schwingförderer zusätzlich einen Aktor umfasst, bei dessen Ansteuerung durch die Steuereinrichtung die gesamte Schwingplatte senkrecht zur Förderoberfläche bewegt wird. Eine plötzliche Bewegung der gesamten Schwingplatte senkrecht zur Förderoberfläche kann zu einem "Flippen" von Objekten, d. h. zu einem Wechsel jener Fläche, mit der das Objekt auf der Fördereroberfläche aufliegt, führen.

Der zusätzliche Aktor kann insbesondere ein elektromechanischer Aktor sein. Beispielsweise kann unterhalb oder oberhalb der Schwingplatte ein Elektromagnet vorgesehen sein und die Schwingplatte selbst oder ein mit der Schwingplatte verbundenes Element kann magnetisch sein.

Durch den zusätzlichen Aktor werden insbesondere makroskopische Bewegungen über beispielsweise mehrere Millimeter ausgelöst. Die Anregung ist impulsartig, dennoch ist eine Anregungsfrequenz typischerweise deutlich unterhalb des Ultraschallbereichs. Beispielsweise kann ein Anregungszyklus des zusätzlichen Aktors wenigstens 100 µs, insbesondere wenigstens eine Millisekunde, beispielsweise 10 Millisekunden dauern. Alternativ ist es möglich, mehrere der Ultraschallwandler synchron anzusteuern, um eine im Wesentlichen einheitliche Bewegung der gesamten Schwingplatte zu erreichen. Die Ultraschallwandler weisen typischerweise einen relativ geringen Hub auf, es können jedoch sehr hohe Beschleunigungen an den Umkehrpunkten der Bewegung erreicht werden.

Um eine Bewegung der Objekte im erfindungsgemäßen Schwingförderer zu überwachen, ist es vorteilhaft, Sensoren vorzusehen, die die Bewegung und/oder Position der Objekte erfassen. Beispielsweise können Kameras, Lichtschranken oder Ähnliches vorgesehen werden. Dabei ist es häufig wünschenswert, einen Sensor unterhalb der Schwingplatte anzubringen oder die Schwingplatte von einer Position unterhalb der Schwingplatte zu beleuchten, um eine besonders leichte optische Erfassung der Objekte durch Abschattung der Lichtquelle zu ermöglichen. Daher ist es vorteilhaft, wenn die Schwingplatte aus einem transparenten Material gebildet ist. Die Schwingplatte kann insbesondere aus transparentem Glas, Kunststoff oder einer transparenten Keramik gebildet sein. Als transparente Keramik kann beispielsweise kubisches ZrO₂ oder Sinterkorund (Al₂O₃) genutzt werden.

Neben dem Schwingförderer betrifft die Erfindung auch ein Verfahren zum Betrieb eines erfindungsgemäßen Schwingförderers, wobei durch die Steuereinrichtung jeweils ein separates Steuersignal an die Anregungselemente bereitgestellt wird, wodurch die Schwingplatte in eine Gesamtschwingung versetzt wird, durch die das auf der Förderoberfläche befindliche Objekt bewegt wird. Insbesondere werden an mehrere Anregungselemente Steuersignalen, die nicht konstant sind, bereitgestellt, so dass sich mehrere angeregte Schwingungen auf der Schwingplatte überlagern. Vorteilhaft werden die Anregungselemente mit Steuersignalen der gleichen Frequenz angesteuert.

Die Steuersignale wenigstens zweier der Anregungselemente können derart vorgegeben werden, dass der Abstand des Objekts von den Anregungspositionen der derart angesteuerten Anregungselemente verringert wird. Beispielsweise können zwei Anregungselemente angesteuert werden, von deren Verbindungslinie ein Objekt beabstandet ist. Das Objekt kann sich dabei auf die Verbindungslinie zwischen den Anregungsbereichen der beiden Anregungselemente und somit auf beide Anregungspositionen zubewegen.

Es ist möglich, dass sich wenigstens zwei Objekte auf der Förderoberfläche befinden, wobei die Steuersignale derart vorgegeben werden, dass die Objekte derart bewegt werden, dass ein Abstand zwischen den Objekten verringert oder vergrößert wird. Für eine Verringerung des Abstandes zwischen den Objekten kann beispielsweise nur einem einzigen der Anregungselemente ein nicht konstantes Steuersignal zugeführt werden. In diesem Fall bewegen sich die wenigstens zwei Objekte auf die genau eine Anregungsposition zu, womit sich ihr Abstand verringern kann. Werden hingegen mehrere der Anregungselemente zur Schwingungserzeugung angesteuert und die Objekte befinden sich in dem Bereich zwischen den Anregungspositionen, so können die Amplituden der Anregungen beispielsweise so gewählt werden, dass sich wenigstens eines der Objekte in Richtung eines ersten der Anregungselemente und wenigstens ein zweites der Objekte in Richtung eines zweiten die Anregungselemente bewegt.

Im erfindungsgemäßen Verfahren kann als der Schwingförderer ein Schwingförderer mit wenigstens drei Anregungselementen verwendet werden, durch deren Anregungspositionen ein Viereck auf der Förderfläche aufgespannt wird, wobei die den Anregungselementen jeweils zugeführten Steuersignale derart vorgegeben werden, dass das Objekt an eine vorgegebene Position innerhalb des Vierecks bewegt wird. Insbesondere kann durch die Anregungselemente ein Dreieck oder ein Viereck aufgespannt werden. Die Steuersignale können insbesondere im Rahmen der Bewegung des Objekts zur vorgegebenen Position zeitlich variiert werden.

Ergänzend oder alternativ ist es möglich, die Anregungselemente derart anzuordnen, dass entlang der Kanten eines Vielecks jeweils die Anregungspositionen mehrerer der Anregungselemente angeordnet sind. Eine Anordnung der Anregungselemente bzw. ihrer Anregungspositionen entlang der Kanten eine Vierecks ermöglicht insbesondere eine im Wesentlichen parallele Bewegung von mehreren Objekten auf der Schwingplatte, da durch die mehreren Anregungselemente entlang der Kante des Vierecks eine im Wesentlichen ebene Wanderwelle erzeugt werden kann.

Weitere Vorteile und Einzelheiten der Erfindung ergeben sich aus den folgenden Ausführungsbeispielen sowie den zugehörigen Zeichnungen. Dabei zeigen schematisch:
- Fig. 1: ein Ausführungsbeispiel eines erfindungsgemäßen Schwingförderers,
- Fig. 2: eine geschnittene Ansicht entlang der Linie II des in Fig. 1 gezeigten Ausführungsbeispiels,
- Fig. 3: ein weiteres Ausführungsbeispiel eines erfindungsgemäßen Schwingförderers,
- Fig. 4: ein drittes Ausführungsbeispiel eines erfindungsgemäßen Schwingförderers,
- Fig. 5: eine geschnittene Ansicht des Ausführungsbeispiels gemäß Fig. 4 entlang der Linie V,
- Fig. 6: ein viertes Ausführungsbeispiel eines erfindungsgemäßen Schwingförderers, und
- Fig. 7: ein fünftes Ausführungsbeispiel eines erfindungsgemäßen Schwingförderers.

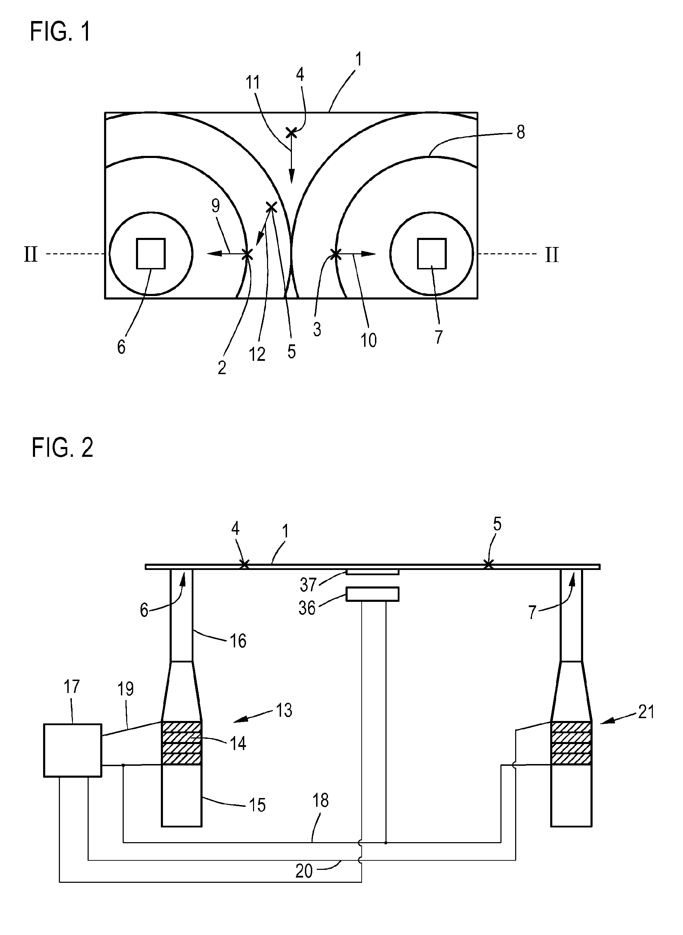

Die Fig. 1 bis 7 zeigen zahlreiche Ausführungsbeispiele für erfindungsgemäße Schwingförderer. Ausführungsbeispiele für die erfindungsgemäßen Verfahren werden im Folgenden im Rahmen der Erläuterungen der Ausführungsbeispiele der erfindungsgemäßen Schwingförderer beschrieben. Eine Erläuterung eines Ausführungsbeispiels eines bestimmten Verfahrens im Zusammenhang mit einem konkreten Ausführungsbeispiel des Schwingförderers schränkt das entsprechende Verfahren nicht auf einen derartigen Schwingförderer ein.

Fig. 1 zeigt ein Ausführungsbeispiel eines Schwingförderers zur zweidimensionalen Bewegung von Objekten. Zunächst wird anhand einer Draufsicht auf die Schwingplatte 1 die Bewegung der Objekte 2, 3, 4 und 5 auf der Schwingplatte 1 bei einer Anregung der Schwingplatte 1 an den Anregungspositionen 6 und 7 beschrieben. Die technische Umsetzung der Anregung wird später detailliert mit Bezug auf Fig. 2 erläutert, die einen Schnitt des Schwungförderers gemäß Fig. 1 entlang der Linie II zeigt.

Die Schwingplatte 1 wird an den Anregungspositionen 6 und 7 jeweils sinusförmig mit gleicher Frequenz angeregt. Da die Schwingplatte 1 aus einem schwingungsdämpfenden Material, beispielsweise transparentem Kunststoff, gebildet ist, werden durch die Anregungen jeweils Wanderwellen hervorgerufen, die eine jeweils ausgehend von der Anregungsposition 6 bzw. 7 mit zunehmender Entfernung abfallende Amplitude aufweisen. Die Ausbreitung dieser Wanderwellen ist in Fig. 1 durch die konzentrischen Kreise 8 angedeutet.

Der Abstand des Objekts 2 von der Anregungsposition 6 ist wesentlich geringer als der Abstand des Objekts 2 zu der Anregungsposition 7. Daher hat die von der Anregungsposition 6 zum Objekt 2 laufende Wanderwelle an der Position des Objekts 2 eine weit größere Amplitude als die von der Anregungsposition 7 einlaufende Wanderwelle. Die Auswirkung der von der Anregungsposition 7 einlaufenden Wanderwelle kann also näherungsweise vernachlässigt werden. Das Objekt 2 wird in die Richtung 9 auf die Anregungsposition 6 zubewegt, da eine Objektbewegung auf einer durch eine Biege- bzw. Oberflächenwelle angeregten Schwingplatte stets entgegen der Ausbreitungsrichtung einer gedämpften Wanderwelle erfolgt. Entsprechend bewegt sich das Objekt 3 in die Richtung 10, auf die Anregungsposition 7 zu. Bei einer gleichzeitigen Anregung von Schwingungen an den Anregungspositionen 6 und 7 mit gleicher Amplitude können somit Ansammlungen von Objekten getrennt werden, da die Objekte abhängig von ihrer Objektposition in unterschiedliche Richtungen bewegt werden.

Durch eine Anpassung der relativen Amplituden der an den Anregungspositionen 6 bzw. 7 eingekoppelte Wanderwellen kann der Punkt zwischen den Anregungspositionen 6 und 7, an dem sich die Bewegungsrichtung ändert, angepasst werden. Ein Schwingförderer gemäß Fig. 1 erlaubt also eine einfache und flexible Separierung von Objekten.

Objekt 4 befindet sich in exakt gleichem Abstand zu den Anregungspositionen 6 und 7, ist jedoch von einer Verbindungsgeraden zwischen den Anregungspositionen 6 und 7 beabstandet. Durch das Einkoppeln einer Wanderwelle mit gleicher Amplitude an den Anregungspositionen 6 und 7 überlagern sich die resultierenden Wanderwellen, so dass die Schwingplatte 1 in eine Gesamtschwingung versetzt wird. An der Objektposition des Objekts 4 entspricht diese Gesamtschwingung einer einlaufenden Wanderwelle, die sich in Richtung des oberen Randes der Schwingplatte 1 ausbreitet. Entsprechend bewegt sich das Objekt 4 in die Richtung 11 senkrecht auf eine Verbindungsgerade zwischen den Anregungspositionen 6 und 7 zu. Durch eine Anpassung der Schwingungsamplituden der an den Anregungspositionen 6 und 7 eingekoppelten Schwingungen kann die Bewegungsrichtung 11 des Objekts 4 variiert werden. Erfolgt beispielsweise nur eine Anregung an der Anregungsposition 6, so bewegt sich das Objekt 4 auf die Anregungsposition 6 zu. Die Bewegungsrichtung 11 des Objekts 4 ist somit über einen weiten Winkelbereich durch eine Anpassung der Schwingungsamplituden an den Anregungspositionen 6, 7 anpassbar.

Ist ein Objekt sowohl von einer Mittellinie zwischen den Anregungspositionen 6 und 7 als auch von der Verbindungsgerade der Anregungspositionen 6 und 7 beabstandet, wie beispielsweise das Objekt 5, so entspricht die resultierende Gesamtschwingung an der Objektposition des Objekts 5 einer Wanderwelle, die von einem Punkt der Verbindungsgeraden zwischen den Anregungspositionen 6 und 7 ausgeht. Somit wird das Objekt 5 in die Richtung 12 bewegt. Mit zunehmender Annäherung an die Verbindungsgerade zwischen den Anregungspositionen 6 und 7 ändert sich die Bewegungsrichtung 12 in Richtung der Anregungsposition 6. Das Objekt 5 führt bei einer konstanten Anregung an den Anregungspositionen 6 und 7 somit eine kurvenförmige Bewegung durch. Die Bewegungsrichtung 12 kann zudem jederzeit durch eine Anpassung der relativen Anregungsamplituden an den Anregungspositionen 6 und 7 angepasst werden, wie bereits zu Objekt 4 erläutert wurde.

Fig. 2 zeigt eine geschnittene Ansicht des in Fig. 1 gezeigten Schwingförderers entlang der Linie II. Die Anregung von Schwingungen wird zunächst für die Anregungsposition 6 erläutert. Die Schwingplatte 1 ist an der Anregungsposition 6 mit einem Ultraschallwandler 13 gekoppelt. Der Ultraschallwandler umfasst einen Piezoaktor 14, der zwischen der Schwingplatte 1 und dem Gegengewicht 15 angeordnet ist. Die Kopplung des Piezoaktors mit der Schwingplatte 1 erfolgt über ein Koppelelement 16, das sowohl mit dem Piezoaktor 14 als auch mit der Schwingplatte 1 verklebt ist. Die Verbindung des Koppelelements 16 zu dem Piezoaktor 14 und/oder der Schwingplatte 1 könnte in alternativen Ausführungsformen beispielsweise auch durch ein Verschrauben oder eine formoder kraftschlüssige Kopplung erfolgen.

Der Piezoaktor 14 ist ein mehrlagiger, vorgespannter Piezoaktor, der in einem nicht gezeigten Gehäuse angeordnet ist, das die Piezokristalle des Piezoaktors vorspannt.

Die Steuereinrichtung 17 stellt über den Anschluss 18 ein Massesignal und über den Anschluss 19 ein Steuersignal für den Piezoaktor 14 bereit. In Abhängigkeit der Spannung des Steuersignals dehnt sich der Piezoaktor 14 aus oder wird komprimiert. Wird durch die Steuereinrichtung 17 ein oszillierendes, insbesondere sinusförmiges, Signal vorgegeben, so schwingt das Gegengewicht 15 aufgrund der Ausdehnungsänderung des Piezoaktors 14 gegen die Schwingplatte 1 und erzeugt somit Schwingungen der Schwingplatte 1 an der Anregungsposition 6.

Zusätzlich stellt die Steuereinrichtung 17 über den Anschluss 20 ein separates Steuersignal für das Anregungselement 21 bereit, durch das die Schwingplatte 1 an der Anregungsposition 7 zu Schwingungen anregbar ist.

Die Steuereinrichtung 17 kann die Amplituden der an das Anregungselement 13 und das Anregungselemente 21 bereitgestellten Steuersignale unabhängig anpassen, um das Amplitudenverhältnis der an den Anregungspositionen 6 und 7 eingekoppelten Schwingungen zu steuern. Entsprechend kann durch die Steuereinrichtung 17 wie bereits zur Fig. 1 erläutert, eine Bewegungsrichtung 9, 10, 11, 12 für die Objekte 2, 3, 4, 5 vorgegeben werden.

Zusätzlich ist es möglich, durch Anpassung der Phasenlage der Steuersignale für die Anregungselemente 13, 21 das Anregungselement 13 oder das Anregungselement 21 dämpfend zu betreiben, so dass eine jeweils vom anderen Anregungselement 13, 21 eingekoppelte Schwingung der Schwingplatte 1 gedämpft wird. Wird beispielsweise das Anregungselement 21 zur Dämpfung angesteuert, so wird im Bereich der Anregungsposition 7 eine von der Anregungsposition 6 einlaufende Wanderwelle zusätzlich gedämpft. Die resultierende Gesamtschwingung der Schwingplatte 1 führt somit zu einer Art abstoßenden Wirkung der Anregungsposition 7 für die Objekte 2, 3, 4 und 5. Somit wird eine zusätzliche Flexibilität bei der Bestimmung und der jeweiligen Bewegungsrichtung 9, 10, 11, 12 erreicht.

Zur Dämpfung wird das Anregungselement 21 mit einem Steuersignal angesteuert, dessen Phasenlage bezüglich des Steuersignals für das Anregungselement 13 fest vorgegeben ist, und zwar so, dass die Anregung an der Anregungsposition 7 einer Schwingung durch die von der Anregungsposition 6 einlaufenden Wanderwelle entgegengesetzt ist. Die Phasenlage des Steuersignals wird aus einer bekannten Ausbreitungsgeschwindigkeit der Wanderwelle auf der Schwingplatte 1 und dem Abstand zwischen den Anregungspositionen 6 und 7 ermittelt.

Alternativ wäre es möglich, diese Phasenlage zu messen. Hierzu wird zunächst ausschließlich das Anregungselement 13 mit einem Steuersignal angesteuert und über den Anschluss 20 wird durch die Steuereinrichtung 17 die am Piezoelement des Anregungselements 21 abfallende Spannung gemessen. Aus einer Phasenlage der abfallenden Spannung bezüglich der Phasenlage des Steuersignals für das Anregungselement 13 wird die Phasenlage für das dämpfende Steuersignal ermittelt.

In einer weiteren alternativen Ausführungsform wäre es möglich, dass die Steuereinrichtung 17 um eine dämpfende Wirkung im Anregungsbereich 7 zu erreichen die Anregungsrichtung 21 derart ansteuert, dass die am Piezoelement abfallende Spannung durch einen Regelkreis auf im Wesentlichen 0 geregelt wird.

Bei einigen Objekten ist es wünschenswert, die Fläche, mit der das Objekt auf der Schwingplatte 1 aufliegt, ändern zu können. Eine derartige Änderung der Auflagefläche ist insbesondere durch eine plötzliche Bewegung der gesamten Schwingplatte senkrecht zur Förderoberfläche möglich. Eine entsprechende senkrechte Bewegung könnte durch ein gleichzeitiges Ansteuern aller der Anregungselemente 13, 21 erreicht werden. Typischerweise ist für eine Änderung der Auflagefläche jedoch ein größerer Hub der Schwingplatte erforderlich, als er mit den Anregungselementen 13, 21 erreicht werden kann.

Daher ist ein zusätzlicher Aktor 36 vorgesehen, der als Elektromagnet ausgebildet ist. Wird der Aktor 36 durch die Steuereinrichtung 17 bestromt, so wird ein an der Schwingplatte 1 befestigter Magnet 37 von dem Aktor 36 zunächst angezogen, wobei eine nicht gezeigte elastische Lagerung der Schwingplatte 1 komprimiert wird. Dieses plötzliche Anziehen des Permanentmagneten 37 führt zu einer plötzlichen Positionsänderung der Schwingplatte 1, womit die Objekte aufgrund ihrer Trägheit kurzfristig die Förderoberfläche verlassen.

Bei einem "Zurückschnappen" der Schwingplatte 1 bei einer Unterbrechung der Bestromung des Aktors 36 durch die Steuereinrichtung 17 werden die Objekte plötzlich und stark in Richtung senkrecht zur Förderoberfläche erschüttert, wodurch die Auflagefläche verändert werden kann.

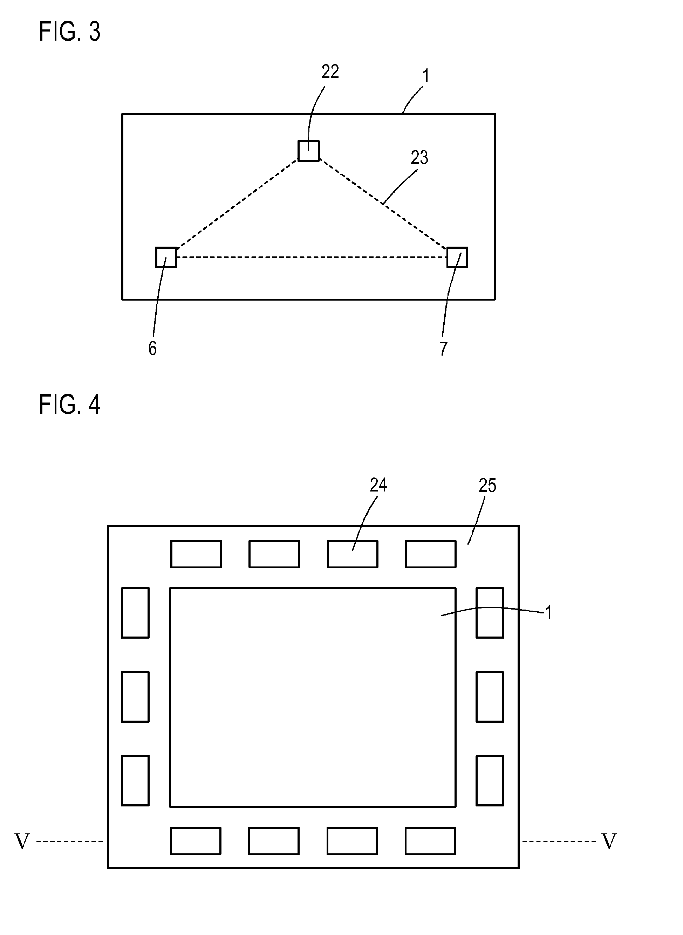

In einem Schwingförderer gemäß Fig. 3 ist zusätzlich zu den Anregungselementen 13, 21 an den Anregungspositionen 6, 7 ein weiteres Anregungselement vorgesehen, das in Abhängigkeit eines separaten Steuersignals die Schwingplatte 1 an der Anregungsposition 22 in Schwingung versetzen kann. Durch das Vorsehen der zusätzlichen Anregungsposition 22 kann ein Objekt, das sich auf der Schwingplatte 1 befindet, durch Bereitstellung entsprechender Steuersignale auch in Richtung der Anregungsposition 22 bzw. in Richtung der Verbindungslinien zwischen der Anregungsposition 22 und der Anregungsposition 6 bzw. der Anregungsposition 7 bewegt werden. Ein Objekt, das sich auf der Förderoberfläche der Schwingplatte 1 befindet, kann somit an jede Position im durch eine gestrichelte Linie angedeuteten Dreieck 23 bewegt werden.

Fig. 4 zeigt ein weiteres Ausführungsbeispiel eines Schwingförderers zur zweidimensionalen Bewegung von Objekten auf der Förderoberfläche der Schwingplatte 1. Die Schwingplatte 1 ist rechteckförmig, wobei an den Seiten des Rechtecks jeweils mehrere Anregungsbereiche 24 mit zugeordneten Anregungselementen vorgesehen sind. Auf der Förderoberfläche sowie auf der der Förderoberfläche abgewandten Seite der Schwingplatte 1 ist randseitig zudem ein Dämpfelement 25, nämlich eine Schicht aus einem elastischen Material mit hoher innerer Reibung, beispielsweise Gummi, aufgeklebt.

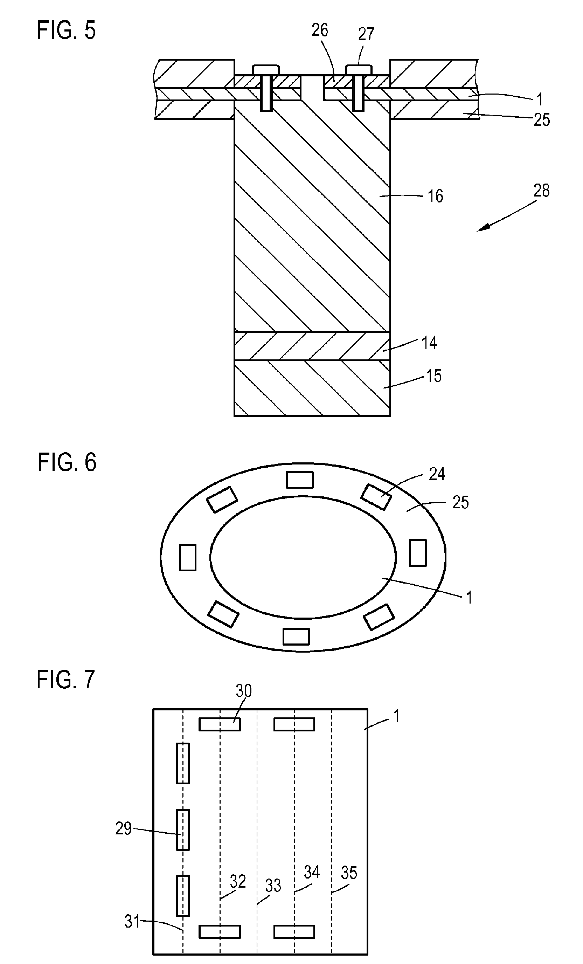

Fig. 5 zeigt eine geschnittene Darstellung des Schwingförderers gemäß Fig. 4 entlang der Linie V. Das Anregungselement 28, das an der Anregungsposition 24 mit der Schwingplatte 1 gekoppelt ist, umfasst ein Gegengewicht 15, einen Piezoaktor 14 und ein Koppelelement 16. Der Aufbau und die Funktion des Anregungselements 28 entsprechen dem zu Fig. 2 erläuterten Anregungselement 13.

Das Koppelelement 16 durchgreift in einem zentralen Bereich des Anregungsbereichs 24 die Schwingplatte 1 und ist seitlich dieses zentralen Bereichs über eine Abstandsplatte 26 und Schrauben 27 mit der Schwingplatte 1 verschraubt. Durch das Durchgreifen der Schwingplatte 1 wird das Anregungselement 28 gegen laterale Bewegungen in Richtung der Förderoberfläche stabilisiert. Durch die Verschraubung und die zusätzliche Stützung durch die Abstandsplatte 26 erfolgt eine sehr gute Schwingungskopplung zwischen dem Anregungselement 28 und der Schwingplatte 1.

Die Nutzung des Dämpferelements 25 erfüllt zwei Funktionen. Durch eine randseitige Dämpfung der Schwingplatte 1 werden einerseits Reflexionen am Rand der Schwingplatte 1 nahezu vollständig unterbunden, womit die Ausbildung stehender Wellen auf der Schwingplatte 1 unterdrückt wird. Während, wie im Folgenden mit Bezug auf Fig. 7 erläutert, stehende Welle bzw. Platteneigenformen in Schwingförderern vorteilhaft genutzt werden können, ermöglicht die Unterdrückung dieser stehenden Wellen eine besonders einfache Ansteuerung der Anregungselemente 28 des Schwingförderers.

Durch das Dämpfelement 25 und die Nutzung mehrerer relativ eng beabstandeter Anregungspositionen entlang der Ränder der Schwingplatte 1 wird zudem bei einer gleichen Ansteuerung der den Anregungspositionen 24 entlang einer der Seite der Schwingplatte 1 zugeordneten Anregungselemente 28 eine im Wesentlichen ebene Wanderwelle generiert, die sich von einer Seite der Schwingplatte 1 in Richtung der gegenüberliegenden Seite der Schwingplatte 1 ausbreitet. Dies führt dazu, dass Objekte auf der Förderoberfläche der Schwingplatte 1 im Wesentlichen unabhängig von ihrer Position parallel in die gleiche Richtung bewegt werden. Die Nutzung mehrerer Anregungspositionen entlang einer Seite einer Schwingplatte in Verbindung mit einer randseitigen Dämpfung der Schwingplatte 1 ermöglicht somit eine im Wesentlichen positionsunabhängige Bestimmung der Bewegungsrichtung für eines oder mehrere Objekte auf der Förderoberfläche der Schwingplatte 1. Bei anderen Ansteuerungen der den Anregungsbereichen 24 zugeordneten Anregungselement 28 kann auch bei dem in Fig. 4 und 5 gezeigten Schwingförderer eine objektpositionsabhängige Bestimmung der Bewegungsrichtung erfolgen, so dass Objekte auch separiert werden können. Im einfachsten Fall können die an zwei gegenüberliegenden Rändern der Schwingplatte 1 angeordneten Anregungselemente 28 jeweils zur Bereitstellung einer im Wesentlichen ebenen Wanderwelle angesteuert werden. Abhängig von der Position eines Objekts auf der Förderoberfläche und der relativen Anregungsamplitude werden Objekte somit in Richtung des einen oder des anderen Randes der Schwingplatte 1 bewegt.

Fig. 6 zeigt ein weiteres Ausführungsbeispiel eines Schwingförderers. Die Form der Schwingplatte 1 ist oval und die Anregungselemente 24 sind randseitig umlaufend am Rand der Schwingplatte 1 angeordnet. Ansonsten entspricht der in Fig. 6 gezeigten Schwingförderer in Aufbau und Funktion dem in Fig. 4 und 5 gezeigten Schwingförderer.

Fig. 7 zeigt ein fünftes Ausführungsbeispiel eines Schwingförderers, bei dem zur Bewegung von Objekten Platteneigenformen genutzt werden. Hierzu werden durch eine Steuereinrichtung an die drei den Anregungspositionen 29 zugeordneten Anregungselemente Steuersignale mit einer Frequenz bereitgestellt, die einer Resonanzfrequenz einer Biegeschwingung der Schwingplatte 1 in Querrichtung in Fig. 7 entspricht. Durch die synchrone Schwingungseinkopplung in den Anregungsbereichen 29 breitet sich von den Anregungsbereichen 29 zunächst eine im Wesentlichen ebene Welle in die Querrichtung aus. Die oberen und unteren Ränder der Schwingungsplatte 1 in Fig. 7 können durch nichtgezeigte Dämpfungselemente zusätzlich bedämpft werden um Reflexionen zu unterdrücken.

Wird die ebene Welle durch die Schwingplatte 1 nur geringfügig gedämpft, so wird sie von den im Bild linken und rechten Rändern der Schwingplatte 1 reflektiert. Durch eine Überlagerung der Schwingungsanregung an den Anregungspositionen 29 und der reflektierten Wellen wird eine stehende Welle ausgebildet, die in den durch die Linien 31, 33 und 35 angedeuteten Bereichen Wellenbäuche aufweist und in den durch die Linien 32 und 34 angedeuteten Bereiche Knoten der Welle, d. h. Bereiche in denen durch die Anregung an den Anregungspositionen 29 keine Schwingung der Schwingplatte 1 erfolgt.

Erfolgt keine Anregung einer Schwingung der Schwingplatte 1 an den Anregungspositionen 30, so führt dies zu einer Bewegung der Objekte auf die Linien 32, 34 zu. Erfolgt nun, wie zu den vorangehenden Ausführungsbeispielen erläutert eine Anregung an den Anregungspositionen 30 mit einer Frequenz, die keine Resonanzfrequenz der Schwingungsplatte 1 entspricht, insbesondere mit einer Resonanzfrequenz eines der jeweiligen Anregungsposition zugeordneten Anregungselements, so sind die Objekte insbesondere in Hochrichtung in Fig. 7 bewegbar. Eine Bewegung in Querrichtung ist durch die Stabilisierung der Objekte im Bereich der Knotenlinien 32, 34 zumindest teilweise unterdrückt, so dass beispielsweise eine Aufwärtsbewegung der Objekte im Bereich der Linie 32 und eine Abwärtsbewegung der Objekte im Bereich der Linie 34 möglich ist, wobei eine Bewegung von Objekten zwischen den Bereichen der Linien 32 und 34 durch den Bauch der stehenden Welle im Bereich der Linie 33 unterdrückt ist.

## Patentansprüche

1. Schwingförderer zur zweidimensionalen Bewegung von Objekten (2, 3, 4, 5), umfassend eine Schwingplatte (1), auf deren Förderoberfläche wenigstens ein Objekt (2, 3, 4, 5) durch Schwingungen der Schwingplatte (1) bewegbar ist, sowie wenigstens zwei Anregungselemente (13, 21, 28) zur Anregung von Schwingungen der Schwingplatte (1), **dadurch gekennzeichnet, dass** die Anregungselemente (13, 21, 28) an voneinander beabstandeten Anregungspositionen (6, 7, 22, 24, 29, 30) mit der Schwingplatte (1) gekoppelte Ultraschallwandler sind, durch die die Schwingplatte (1) an der jeweiligen Anregungsposition (6, 7, 22, 24, 29, 30) in Abhängigkeit eines jeweils separat durch eine Steuereinrichtung (17) an das jeweilige Anregungselement (13, 21, 28) bereitstellbaren jeweiligen Steuersignals zur Schwingung anregbar ist.

2. Schwingförderer nach Anspruch 1, **dadurch gekennzeichnet, dass** die Anregungselemente (13, 21, 28) durch die Steuereinrichtung (17) derart ansteuerbar sind, dass durch eine Überlagerung der angeregten Schwingungen die Förderoberfläche in eine Gesamtschwingung versetzbar ist.

3. Schwingförderer nach Anspruch 1 oder 2, **dadurch gekennzeichnet, dass** er wenigstens drei der Anregungselemente (13, 21, 28) umfasst, wobei die Anregungsposition (6, 7, 22, 24, 29, 30) des dritten Anregungselements (13, 21, 28) von einer Verbindungsgerade zwischen den Anregungspositionen (6, 7, 22, 24, 29, 30) des ersten und des zweiten Anregungselements (13, 21, 28) beabstandet ist.

4. Schwingförderer nach einem der vorangehenden Ansprüche, **dadurch gekennzeichnet, dass** die Schwingplatte (1) mehreckig, insbesondere rechteckig, mit mehreren Seiten ist, wobei randseitig im Bereich jeder der Seiten jeweils wenigstens eines der Anregungselemente (13, 21, 28) angeordnet ist.

5. Schwingförderer nach einem der Ansprüchen 1 bis 3, **dadurch gekennzeichnet, dass** die Schwingplatte (1) im Wesentlichen rund oder elliptisch ist, wobei die Anregungselemente (13, 21, 28) randseitig umlaufend angeordnet sind.

6. Schwingförderer nach einem der vorangehenden Ansprüche, **dadurch gekennzeichnet, dass** die Ultraschallwandler jeweils einen, insbesondere vorgespannten, mehrlagigen Piezoaktor (14) umfassen.

7. Schwingförderer nach Anspruch 6, **dadurch gekennzeichnet, dass** der Piezoaktor (14) jeweils zwischen der Schwingplatte (1) und einem Gegengewicht (15) angeordnet ist.

8. Schwingförderer Anspruch 6 oder 7, **dadurch gekennzeichnet, dass** der Piezoaktor (14) oder ein mit dem Piezoaktor (14) fest verbundenes Koppelelement (16) jeweils mit der Schwingplatte (1) verklebt und/oder verschraubt und/oder formschlüssig verbunden ist.

9. Schwingförderer nach einem der vorangehenden Ansprüche, **dadurch gekennzeichnet, dass** der Schwingförderer (1) wenigstens ein Dämpfelement (25) umfasst und/oder die Schwingplatte (1) selbst aus einem schwingungsdämpfenden Material gebildet ist, sodass die Schwingungsamplitude der Schwingplatte (1) bei einer Anregung durch wenigstens eines der Anregungselemente (13, 21, 28) mit zunehmendem Abstand von der dem Anregungselement (13, 21, 28) zugeordneten Anregungsposition (6, 7, 22, 24, 29, 30) in zumindest eine Richtung entlang der Förderoberfläche abfällt.

10. Schwingförderer nach Anspruch 9, **dadurch gekennzeichnet, dass** das Dämpfelement (25) an einer Seitenfläche und/oder randseitig an der Förderoberfläche und/oder randseitig an der der Förderoberfläche abgewandten Fläche der Schwingplatte (1) angeordnet ist.

11. Schwingförderer nach Anspruch 9 oder 10, **dadurch gekennzeichnet, dass** das Dämpfelement (25) eine flächige Schicht aus einem schwingungsdämpfenden Material ist.

12. Schwingförderer nach einem der vorangehenden Ansprüche, **dadurch gekennzeichnet, dass** wenigstens ein ausgewähltes der Anregungselemente (13, 21, 28) derart durch die Steuereinrichtung steuerbar ist, dass es eine Schwingungsamplitude einer durch wenigstens ein weiteres der Anregungselemente (13, 21, 28) erzeugten Schwingung der Schwingplatte (1) an der dem ausgewählten Anregungselement (13, 21, 28) zugeordneten Anregungsposition (6, 7, 22, 24, 29, 30) reduziert.

13. Schwingförderer nach Anspruch 12, **dadurch gekennzeichnet, dass** die Steuereinrichtung (17) ausgebildet ist, das ausgewählte Anregungselement (13, 21, 28) mit einem Steuersignal anzusteuern, dass phasenstarr mit einer vorgegebenen Phasenlage zu dem Steuersignal des weiteren Anregungselements (13, 21, 28) ist.

14. Schwingförderer nach Anspruch 12, **dadurch gekennzeichnet, dass** die Steuereinrichtung (17) ausgebildet ist, eine Schwingung an der Anregungsposition (6, 7, 22, 24, 29, 30) des ausgewählten Anregungselements (13, 21, 28) zu erfassen und das Steuersignal für das ausgewählte Anregungselement (13, 21, 28) in Abhängigkeit der erfassten Schwingung zu bestimmen.

15. Schwingförderer nach einem der vorangehenden Ansprüche, **dadurch gekennzeichnet, dass** durch die Steuereinrichtung (17) ein Steuersignals mit der Resonanzfrequenz des jeweiligen Anregungselements (13, 21, 28) bereitstellbar ist.

16. Schwingförderer nach einem der Ansprüche 1 bis 14, **dadurch gekennzeichnet**, das durch die Steuereinrichtung (17) derartige Steuersignale für die Anregungselemente (13, 21, 28) bereitstellbar sind, dass eine stehende Welle auf der Schwingplatte (1) erzeugt wird.

17. Schwingförderer nach einem der vorangehenden Ansprüche, **dadurch gekennzeichnet, dass** er zusätzlich einen Aktor (36) umfasst, bei dessen Ansteuerung durch die Steuerreinrichtung (17) die gesamte Schwingplatte (1) senkrecht zur Förderoberfläche bewegt wird.

18. Schwingförderer nach einem der vorangehenden Ansprüche, **dadurch gekennzeichnet, dass** die Schwingplatte (1) aus einem transparenten Material gebildet ist.

19. Verfahren zum Betrieb eines Schwingförderers nach einem der vorangehenden Ansprüche, **dadurch gekennzeichnet, dass** durch die Steuereinrichtung (17) jeweils ein separates Steuersignal an die Anregungselemente (13, 21, 28) bereitgestellt wird, wodurch die Schwingplatte (1) in eine Gesamtschwingung versetzt wird, durch die das auf der Förderoberfläche befindliche Objekt (2, 3, 4, 5) bewegt wird.

20. Verfahren nach Anspruch 19, **dadurch gekennzeichnet, dass** die Steuersignale wenigstens zweier der Anregungselemente (13, 21, 28) derart vorgegeben werden, dass der Abstand des Objekts (2, 3, 4, 5) von den Anregungspositionen (6, 7, 22, 24, 29, 30) der derart angesteuerten Anregungselemente (13, 21, 28) verringert wird.

21. Verfahren nach Anspruch 19 oder 20, **dadurch gekennzeichnet, dass** sich wenigstens zwei Objekte auf der Förderoberfläche befinden, wobei die Steuersignale derart vorgegeben werden, dass die Objekte (2, 3, 4, 5) derart bewegt werden, dass ein Abstand zwischen den Objekten (2, 3, 4, 5) verringert oder vergrößert wird.

22. Verfahren nach einem der Ansprüche 19 bis 21 , **dadurch gekennzeichnet, dass** als der Schwingförderer ein Schwingförderer mit wenigstens drei Anregungselementen (13, 21, 28) verwendet wird, durch deren Anregungspositionen (6, 7, 22, 24, 29, 30) ein Vieleck auf der Förderfläche aufgespannt wird, wobei die den Anregungselementen (13, 21, 28) jeweils zugeführten Steuersignal derart vorgegeben werden, dass das erste Objekt (2, 3, 4, 5) an eine vorgegebene Position innerhalb des Vielecks bewegt wird.
